# EUROPÄISCHE PATENTSCHRIFT

(11) **EP 0 956 181 B1**
(45) Veröffentlichungstag und Bekanntmachung des Hinweises auf die Patenterteilung: **04.06.2003**
(21) Anmeldenummer: 98905322.8
(22) Anmeldetag: 21.01.1998
(51) Int. Cl.: B24D 3/06, B24B 3/34, B24B 33/08

(54) **WERKZEUG ZUR SPANABHEBENDEN BEARBEITUNG VON WERKSTÜCKEN**
TOOL FOR MACHINING WORKPIECES BY CUTTING
OUTIL POUR L'USINAGE DE PIECES PAR ENLEVEMENT DE COPEAUX

(30) Priorität: 30.01.1997 DE 19703202
(43) Veröffentlichungstag der Anmeldung: 17.11.1999
(73) Patentinhaber: Deutsches Zentrum für Luft- und Raumfahrt e.V., 53175 Bonn (DE)
(72) Erfinder: KRENKEL, Walter, D-71272 Renningen (DE); KOCHENDÖRFER, Richard, D-70619 Stuttgart (DE); FRIESS, Martin, D-72636 Frickenhausen (DE)
(74) Vertreter: Grimm, Ekkehard, Dipl.-Phys.
(86) Internationale Anmeldenummer: EP9800291
(87) Internationale Veröffentlichungsnummer: WO98033625

(56) Entgegenhaltungen:
- US-A- 4 353 953
- US-A- 4 504 284
- PATENT ABSTRACTS OF JAPAN vol. 018, no. 354 (M-1632), 5.Juli 1994 & JP 06 091541 A (OSAKA DIAMOND IND CO LTD;OTHERS: 01), 5.April 1994,

## Beschreibung

Die vorliegende Erfindung betrifft ein Werkzeug zur spanabhebenden Bearbeitung von Werkstücken.

Die US-A-4,353,953 beschreibt ein Honschleifwerkzeug, unter anderem mit Schleifkörpern, die aus einem Grundkörper, der im wesentlichen aus Graphit gebildet ist, und einer Oberflächenschicht bestehen. Die Oberflächenschicht ist aus Diamant, kubischem Bornitrid oder einer Mischung aus diesen beiden gebildet, wobei diese Kristalle vor ihrem Aufbringen auf den Grundkörper mit einem Harz gebunden werden. Die Diamantkristalle können hierbei mit Kohlenstoff beschichtet sein und der Mischung können etwa 10% gebrochene Kohlenstoffgewebefasern (crushed carbon cloth) zugegeben werden.

In der US-A-4,504,284 wird ein Schneideinsatz, mit einem Kern aus Kohlenstoff, einem Füller und Kohlenstoffasern aufgebaut, beschrieben, frei von Diamant und kubischen Bornitridkristallen. An den Ecken entlang der oberen oder der unteren Oberfläche des Kerns bzw. Körpers sind Diamant oder kubische Bornitridkristalle vorhanden, die an den Kern mit einer ß-Siliziumkarbid- und Si-Matrix angebondet sind.

Ein Werkzeug zur spanabhebenden Bearbeitung ist auch aus der DE-A1-41 06 005 bekannt. Solche Werkzeuge werden auf unterschiedlichen Arbeitsgebieten eingesetzt, die im wesentlichen das Gebiet der fräsenden, zerspanenden, honenden und schleifenden Materialabtragung umfassen. Bei diesen Bearbeitungsvorgängen kommt es auf einen präzisen Materialabtrag an. Weiterhin sollen solche Werkzeuge hohe Standzeiten erzielen, d.h. sie sollen über einen langen Zeitraum mit einem entsprechenden, reproduzierbaren und kontrollierbaren Materialabtrag einsetzbar sein, auch in Bezug auf die angestrebte Präzision. Die Standzeit solcher Werkzeuge wird wesentlich durch die Hartstoffe, die sich im Arbeitsbereich des Werkzeugs befinden, beeinflußt. Solche Hartstoffe weisen scharfkantige Strukturen auf, da es sich um kristalline Bestandteile handelt. Diese scharfkantige, kristalline Struktur wird über die Dauer der Bearbeitung zerstört, so daß die abrasive Wirkung des Werkzeugs nachläßt. Je nachdem, welche Materialien mit einem solchen Werkzeug bearbeitet werden sollen, darüberhinaus abhängig von der Bearbeitungsgeschwindigkeit, d.h. derjenigen Geschwindigkeit, die das Werkzeug zu der zu bearbeitenden Oberfläche des Werkstücks ausübt, treten besonders im Arbeitsbereich hohe Temperaturen auf, denen das Werkzeug standhalten muß.

Das Schleif- und Trennwerkzeug, wie es in der vorstehend angeführten DE-A1 41 06 005 beschrieben ist, umfaßt einen Grundkörper mit einer Kunststoffmatrix, wobei der Grundkörper mit Kohlenstoffasern verstärkt ist. Auf dem Grundkörper selbst ist ein Belag aufgebracht, der in einem Bindemittel Hartstoffe in Form von Diamant- oder Bornitridschleifkörnern enthält. Auf dem Grundkörper ist als Zwischenschicht zwischen dem Grundkörper und dem Belag eine galvanisch oder stromlos aufgetragene Metallschicht angeordnet, um eine bessere Haftung des Schleifbelags an dem Grundkörper zu erzielen. Problematisch bei solchen Schleifwerkzeugen ist, daß die Temperaturfestigkeit durch diejenige des Kunststoffs begrenzt ist. Gerade bei hoher Temperatureinwirkung tendiert der Kunststoff dazu, weich zu werden oder seine Bindefähigkeit zu verlieren, so daß gerade dann für Präzisionsarbeiten die Formstabilität des Werkzeuges nicht mehr gewährleistet wird. Dies führt auch dazu, daß komplizierte Werkzeugstrukturen, beispielsweise zum Erstellen von Verzahnungen, nicht so hergestellt werden können, daß sie über längere Standzeiten oder bei hohen Abtragsleistungen ihre Stabilität und damit Form beibehalten.

Ausgehend von dem vorstehend angegebenen Stand der Technik und der damit verbundenen Problematik liegt der vorliegenden Erfindung die Aufgabe zugrunde, ein Werkzeug zur spanabhebenden Bearbeitung zu schaffen, das eine hohe Temperaturstabilität, Thermoschockbeständigkeit und Schadenstoleranz zeigt und das auch in beliebigen Formen und Abmessungen für den gewünschten Anwendungszweck mit der notwendigen Präzision hergestellt werden kann.

Die vorstehende Aufgabe wird gelöst durch ein Werkzeug zur spanabhebenden Bearbeitung von Werkstücken, das mindestens ein zerspanendes Werkzeugteil mit wenigstens einem Arbeitsbereich in Form einer schneidenden (von schneidenden) Fläche(n) aufweist (aufweisen), und wobei wenigstens die schneidende(n) Fläche(n) aus Verbundwerkstoff besteht (bestehen), welcher Verbundwerkstoff kontinuierliche Fasern aus Kohlenstoff und/oder keramischem Werkstoff und kristallinem Hartstoff aufweist, wobei ein Teil der Fasern im Oberflächenbereich der schneidenden Flächen endet und wobei die im Oberflächenbereich der schneidenden Flächen endenden Fasern mit ihrer Achse so ausgerichtet sind, dass sie eine größere Richtungskomponente in Richtung der Flächennormalen im Oberflächenbereich der schneidenden Fläche(n) als senkrecht dazu aufweisen, wobei der Verbundwerkstoff durch ein Verfahren erhältlich ist, nach welchem ein mit kontinuierlichen Fasern aus Kohlenstoff und/oder keramischem Werkstoff poröses Fasergerüst gebildet wird, wobei das Fasergerüst mit flüssigem Metall infiltriert wird, und wobei durch Reaktion des Metalls mit Kohlenstoff der Fasern und/oder mit als Füllstoff zugesetztem Kohlenstoff in situ kristalliner Hartstoff erzeugt wird.

Bevorzugt ist das Fasergerüst in Form eines Gewebes, Gewirkes und/oder Gestrickes gebildet.

Das Grundkonzept des Werkzeugs besteht darin, daß zumindest der Arbeitsbereich, wie beispielsweise eine Schneide, aus einem aus kontinuierlichen Fasern aufgebauten Fasergerüst gebildet wird, das die Grundstruktur darstellt, um darin eine Matrix zu binden, die die abrasiven Hartstoffe als eine wesentliche Komponente enthält. Diese Hartstoffe werden bevorzugt durch Flüssiginfiltration eines Metalls in situ gebildet, d.h. es wird flüssiges Metall in eine definiert gebildete, offene Porenstruktur des Kohlenstoff-gebundenen Fasergerüsts infiltriert. Anstelle der Flüssiginfiltration des Metalls kann dieses auch in Dampfform, beispielsweise mittels Gasphasenabscheideverfahrens, infiltriert werden. Mit dieser Vorgehensweise ist es nicht notwendig, beispielsweise Kunststoffe heranzuziehen, um die Hartstoffe, die für die abrasive Wirkung der Werkzeugoberfläche erforderlich sind, einzubetten. Das Gerüst aus Fasern aus Kohlenstoff und/oder keramischem Werkstoff hat zum einen den Vorteil, daß es den hohen Temperaturen standhält, die beim Infiltrieren des flüssigen Metalls in die poröse Struktur auftreten und die in Bezug auf die in Frage kommenden Hartstoffe oberhalb 1400°C liegen, zum anderen kann aus diesem Fasergerüst eine Vorform gebildet werden, die, vor der Flüssiginfiltrierung des Metalls, annähernd der Endkontur des herzustellenden Werkzeugs, auch dann, wenn es komplizierte Oberflächenstrukturen besitzt, entspricht. Diese Struktur der Vorform aus Kohlenstoff-gebundenen Kohlenstoffasern und/oder keramischen Fasern bildet eine äußerst stabile Grundstruktur, die den Arbeitsbedingungen eines spanabhebenden Werkzeugs standhält, das allerdings im Bereich der Arbeitsoberfläche ausreichend Freiräume bietet, so daß die in der Matrix eingelagerten Hartstoffe mit ihren scharfkantigen, kristallinen Strukturen freiliegen, um den Abtrag an dem zu bearbeitenden Werkstück vorzunehmen und dennoch fest in die Matrix eingebettet sind. Während dieses Fasergerüst während der Herstellung die stabilisierende Komponente bildet, tritt deren Stabilität, im Vergleich zu den eingebetteten Hartstoffen, für den Materialabtrag in den Hintergrund, d.h. für den Abtrag an dem zu bearbeitenden Werkstoff. Dennoch
zeigt das Fasergerüst eine positive Eigenschaft und Wirkung dahingehend, daß zum einen die Werkstoffestigkeit, Werkstoffsteifigkeit und Werkstoffthermoschockbeständigkeit erhöht wird, und daß zum anderen die an der Arbeitsoberfläche freiliegende Faserstruktur, d.h. die im Bereich der Oberfläche des Arbeitsbereichs endenden kontinuierlichen Fasern, eine Bürstenwirkung zeigt, indem die Faserenden über die bearbeitete Oberfläche streifen und dadurch zu einem gewissen Anteil am Materialabtrag beitragen. Diese definiert gerichtete Struktur der Fasern mit der vorstehend angezeigten Wirkung ist insbesondere dadurch gegeben, daß die Endlosfasern definiert in dem Fasergerüst orientiert werden können.

Im Hinblick auf die vorstehend erwähnte Bürstenwirkung des Fasergerüsts sind bevorzugt die im Oberflächenbereich des Arbeitsbereichs endenden Fasern des Werkzeugs mit ihrer Achse so ausgerichtet, daß sie eine größere Richtungskomponente in Richtung der Flächennormalen im Oberflächenbereich des Arbeitsbereichs als senkrecht dazu aufweisen. Dies bedeutet, daß die Fasern borstenartig in Bezug auf die Oberfläche enden, im Gegensatz zu einem parallelen Verlauf dazu, wodurch auch neben der Bürstenwirkung die freie Fläche zwischen den Fasern einen großen Anteil ausmacht, der mit den kristallinen Hartstoffen ausgefüllt wird.

In Bezug auf das Fasergerüst ist ein solches von Vorteil, bei dem ein wesentlicher Anteil der Fasern aus Kohlenstoff gebildet ist; bevorzugt ist ein Anteil von 50% bis 100%, wobei ein Fasergerüst aus reinen Kohlenstoffasern in vielen Fällen, die noch nachfolgend ersichtlich werden, besondere Vorteile bietet. Der bevorzugte Einsatz eines Kohlenstoffasergerüsts ergibt sich dadurch, daß zum einen Kohlenstoffasern leicht zu einem Fasergerüst im unbehandelten Zustand formbar sind, beispielsweise in Form von Geweben, Gewirken oder Gestricken, zum anderen ein solches Kohlenstoffasergerüst nach Imprägnieren mit einem Kohlenstoff-haltigen Polymer unter Temperaturbehandlung zu einem formstabilen Vorkörper verfestigbar ist. Weiterhin können die Kohlenstoffasern teilweise dazu genutzt werden, mit dem infiltrierten, flüssigen Metall Karbide zu bilden. Solche Metallkarbide sind die bevorzugten Hartstoffe, um den abrasiven Abtrag zu erzielen. Ein Teil des Hartstoffs sollte in Form von kristallinem Karbid vorliegen. Kristallines Karbid zeigt sehr scharfkantige Kristallstrukturen, die für einen optimalen Abtrag der zu bearbeitenden Materialien förderlich ist. Die Korngröße des kristallinen Karbids sollte 5 bis 100 um, vorzugsweise größer als 10 µm, betragen. Es hat sich gezeigt, daß dann, falls die Korngröße zu niedrig eingestellt wird, für Hochleistungsbearbeitung die Abtragsleistung relativ gering ist, während bei einer Korngröße oberhalb von 10 µm der Effekt erzielt wird, daß die sich jeweils neu bildenden Schneiden durch Abbrechen von Körnern die Schneidleistung beträchtlich steigern.

Das kristalline Karbid sollte aus der Gruppe Silizium-, Titan-, Zirkonium-, Chromoder Vanadium-Karbid ausgewählt werden. Die jeweiligen Metalle, d.h. Silizium, Titan, Zirkonium, Chrom und Vanadium eignen sich insbesondere für die angesprochene Fiüssiginfiltration, da deren Schmelzpunkte unterhalb von 2000°C liegen, d.h. derjenige von Silizium liegt bei 1410°C, der von Titan bei 1683°C, der von Zirkonium bei 1852°C, der von Chrom bei 1875°C und der von Vanadium bei 1919°C. Es hat sich gezeigt, daß aus der vorstehenden Gruppe Silizium nicht nur aufgrund seines niedrigen Schmelzpunktes zu bevorzugen ist, sondern auch unter dem Gesichtspunkt, daß sich gerade dann, wenn Kohlenstoffasern für das Fasergerüst eingesetzt werden, Teile des Siliziums mit Kohlenstoffasern Siliziumkarbid bilden, so daß ein hoher Anteil an Hartstoffen in dem Verbundkörper erzielbar ist.

Um den Schmelzpunkt noch weiter zu senken, und zwar im Hinblick auf die Flüssiginfiltration des flüssigen Metalls in die Porenstruktur um das Fasergerüst herum bei der Herstellung des Verbundwerkstoffs, können Gemische aus Übergangsmetallen verwendet werden, so daß sich Eutektika bilden, die aufgrund der niedrigen Schmelztemperatur die Fasern nicht übermäßig thermisch belasten, darüberhinaus die Dauer des gesamten Metallinfiltrationsprozeß verkürzen. Bevorzugt werden die Metallschmelzen, wie die Siliziumschmelze, auch mit Bor versetzt, wobei der Anteil an Bor kleiner als 10% des gesamten Metalls, das in die Matrix eingebracht wird, betragen soll. Durch einen Anteil von Bor in Höhe von 3% des gesamten Metalls erniedrigt sich beispielsweise der Schmelzpunkt für Silizium auf weniger als 1385°C. Außerdem entstehen Boride und Silicide mit einer hohen abrasiven Wirkung und das Kornwachstum des Siliziumkarbids wird erhöht, das bedeutet, daß die Abtragsleistung und/oder die Standzeit des Werkzeugs gesteigert werden kann.

Die Fasern des Fasergerüsts können auch aus nicht-oxydischen, keramischen Fasern, wie Siliziumkarbid und/oder Siliziumnitrid oder aus Fasersystemen, die Silizium, Bor, Kohlenstoff und Stickstoff enthalten, gebildet sein. Bei den bevorzugten Siliziumkarbid- und/oder Siliziumnitridfasern beträgt der Anteil an Siliziumkarbidfasern und/oder Siliziumnitridfasern in Bezug auf das gesamte Fasergerüst zwischen 50% und 100%. Durch diese Siliziumkarbidfasern oder Siliziumnitridfasern wird, im Gegensatz zu den Kohlenstoffasern, erreicht, daß der Anteil an Hartstoffen im Verbundwerkstoff allein dadurch gesteigert werden kann, daß er bereits in Faserform vorliegt.

Der Faservolumengehalt in Bezug auf eine Volumeneinheit des Verbundwerkstoffs wird auf 20 bis 70%, vorzugsweise über 50%, eingestellt. Ein hoher Faseranteil pro Volumeneinheit, vorzugsweise in dem Bereich von 50% bis 70%, hat den Vorteil, daß ein dichter Werkstoff mit guter Einbettung der Hartstoffe entsteht, was zu hoher Korngrenzfestigkeit führt.

Der Verbundwerkstoff kann in seinen abrasiven Eigenschaften definiert eingestelt werden, indem in die Matrix des Verbundwerkstoffs Füllstoffe in Form von pulverförmigen Hartstoffen und/oder pulverförmigem Kohlenstorf eingebracht wird. Bevorzugt liegt jede Füllstoffkomponente jeweils in einer Menge von weniger als 10 Gewichts-% des Verbundwerkstoffs vor. Pulverförmiger Kohlenstoff sollte in einem definiert eingestellten Anteil in die Matrix eingebracht werden, falls Metallkarbide als Hartstoffe gebildet werden sollen, d.h. es wird in ausreichendem Maße Kohlenstoff bereitgestellt, der mit dem über Flüssiginfiltration eingebrachten Metall, beispielsweise Silizium, zu Siliziumkarbid reagiert. Es können aber auch definiert pulverförmige Hartstoffe in vorgegebenen Korngrößen eingebracht werden, die in der Matrix definiert verteilt werden. Hierdurch läßt sich der Hartstoffgehalt, beispielsweise der Siliziumkarbid-Gehalt, des Verbundwerkstoffs gezielt erhöhen und damit auch die spanabhebende Abtragsleistung des Werkzeugs. Füllstoffe, die so in die Matrix eingebracht werden, sollten eine Korngröße im Bereich von 1 µm bis 100 µm aufweisen; in diesem Korngrößenbereich werden gute abrasive Eigenschaften erreicht.

Falls Kohlenstoffe als Füllstoffe in die Matrix eingebracht werden, sollte der Kohlenstoff in Form von amorphem Kohlenstoff vorliegen. Amorpher Kohlenstoff hat den Vorzug, da er eine größere abrasive Wirkung im Vergleich zu graphitischem Kohlenstoff besitzt; außerdem wird die Karbid-Bildung mit den metallischen Werkstoffen gefördert.

Wie bereits vorstehend angeführt ist, wird als Metallkarbid bevorzugt ein solches eingesetzt, das durch Flüssiginfiltration des jeweiligen Metalls in eine Porenstruktur um das Fasergerüst unter Reaktion mit Kohlenstoff gebildet ist. Hierbei sollte der Volumenanteil der gefüllten Porenstruktur im Bereich zwischen 5% und 50%, vorzugsweise zwischen 15% und 30%, und zwar bezogen auf das Volumen des Verbundwerkstoffs, betragen. Der Bereich zwischen 15% und 30% ist zu bevorzugen, da dann die Restmenge an freiem Metall begrenzt ist, eine hohe Kapillarwirkung gegeben ist, die eine schnelle Infiltration zur Folge hat, und außerdem die Reaktion mit den Fasern akzeptabel niedrig ist..

Für das Fasergerüst aus Kohlenstoffasern können alle Arten und Modifikationen von Fasern, wie beispielsweise hochfeste oder hochmodulige Fasern, verwendet werden, jedoch sollten vorzugsweise Fasern eingesetzt werden, die durch ein Zug-E-Modul im Bereich von 200 GPa bis 300 GPa gekennzeichnet sind. Derartige Fasern weisen eine genügend hohe thermische Stabilität auf, sowohl während der Herstellung des Verbundwerkstoffs unter Wärmeeinwirkung als auch während des Einsatzes des Werkzeugs zur spanabhebenden Bearbeitung. Außerdem wurden für diese Kohlenstoffasern die höchsten Faser-Keramik-Festigkeiten des Verbundwerkstoffs erzielt. Die Orientierung der kontinuierlichen Fasern kann beliebig in allen Raumachsen erfolgen, jedoch ist ein quasi-isotroper Aufbau zumindest in einer Flächenebene zu bevorzugen.

Nachfolgend werden Ausführungsbeispiele von erfindungsgemäß aufgebauten Werkzeugen anhand der Zeichnungen beschrieben. In den Zeichnungen zeigt
- Figur 1A: eine Draufsicht auf eine einteilige Frässcheibe,
- Figur 1B: einen Schnitt entlang der Schnittlinie I-I in Figur 1A,
- Figur 2A: eine Draufsicht auf einen Fräskopf mit einem Trägerkörper und eingesetzten Fräsmessern,
- Figur 2B: einen Schnitt entlang der Schnittlinie II-II in Figur 2A,
- Figur 3: eine Schleifscheibe mit einem äußeren Schleifring sowie einer inneren Trägerscheibe,
- Figuren 4A, B und C: Querschnitte des Schleifrings der Figur 3 mit unterschiedlichen Schleifkonturen,
- Figuren 5A und 5B: einen konischen und einen zylindrischen Schleifstein,
- Figur 6: eine Schneidwelle mit mehreren, um den Umfang der Welle verteilten und in Richtung der Achse verlaufenden Schneidflächen,
- Figuren 7A und 7B: jeweils eine Rasterelektronenmikroskopaufnahme des erfindungsgemäßen Verbundwerkstoffs in zwei zueinander senkrecht stehenden Ebenen, wobei der Querschnitt, wie er in Figur 7A dargestellt ist, in den Figuren 3 und 6 der hervorgehobenen Fläche, die mit X bezeichnet sind, entspricht, während die Darstellung der Figur 7B der in den Figuren 3 und 6 gezeigten Fläche, die mit Y bezeichnet sind, entspricht.

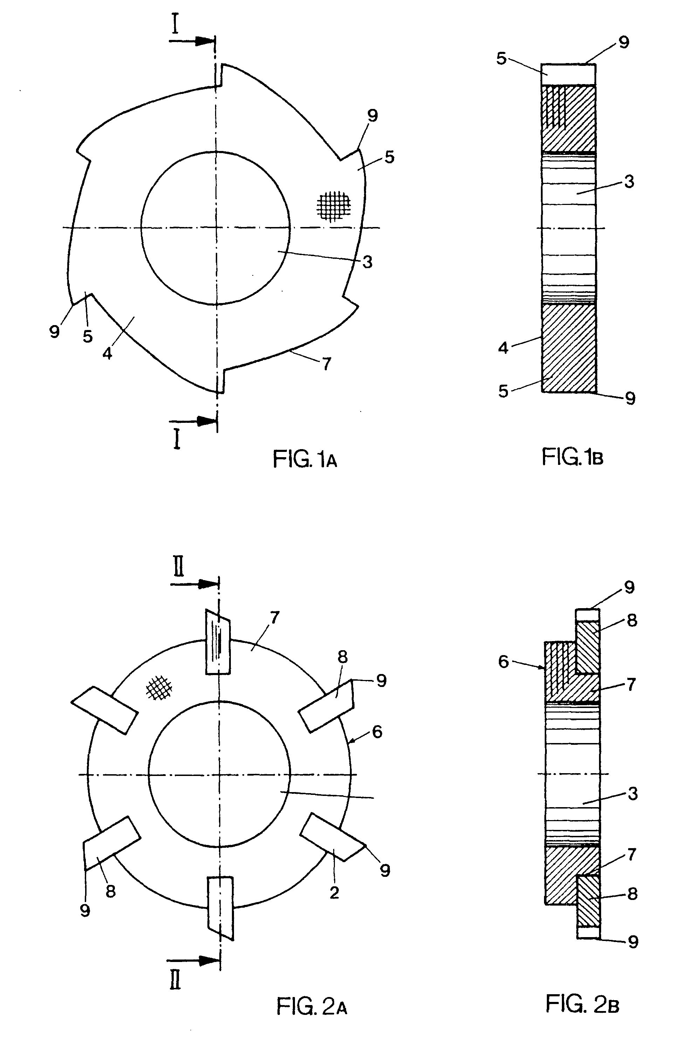

Um erfindungsgemäße Werkzeuge zur spanabhebenden Bearbeitung von Werkstücken herzustellen, wie sie in den Figuren 1 bis 7 dargestellt sind, sind die nachfolgenden Verfahrensschritte anzuwenden.

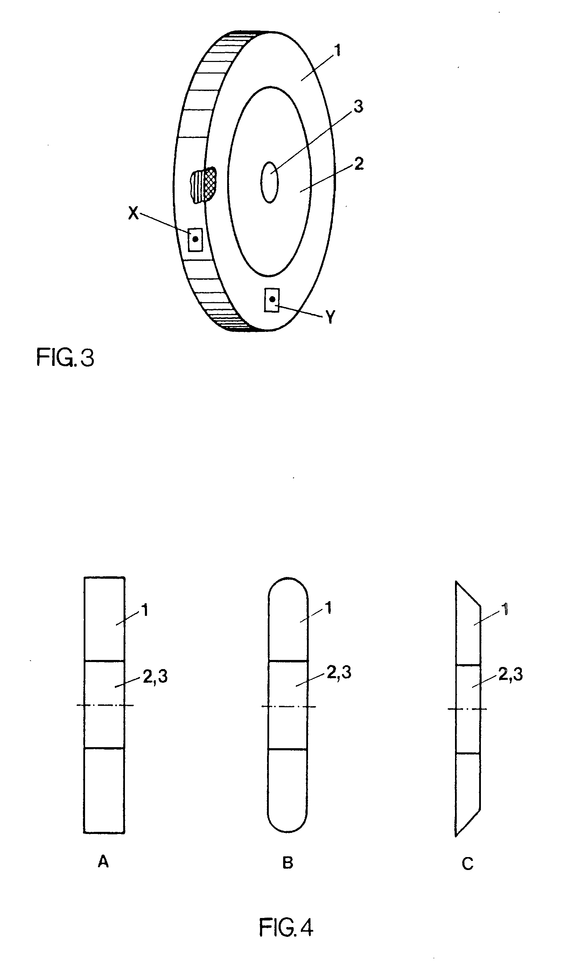

Um einen Schleifring 1 herzustellen, wie er in Figur 3 dargestellt ist, der nach Fertigstellung auf einer Trägerscheibe 2 aufgesetzt wird, die eine Aufnahmebohrung 3 für eine Antriebswelle besitzt, wird eine der Form des Schleifrings 1 entsprechende Form bereitgestellt. In dieser Form wird dann ein Fasergerüst, vorzugsweise aus Kohlenstoffasern, gegebenenfalls auch aus keramischen Fasern, aufgebaut. Dieses Gerüst sollte eine definierte, zwei- oder dreidimensionale Struktur aufweisen, beispielsweise in Form von Gewirken, Gestricken oder Geweben, wobei darauf zu achten ist, daß kontinuierliche Fasern verwendet werden. Die einzelnen Faserlagen werden orthotrop übereinander gestapelt derart, daß die einzelnen Fasern definiert zu der Schleifoberfläche ausgerichtet sind. Dies bedeutet, daß ein hoher Anteil an Fasern im wesentlichen in Richtung der auf der Schleifoberfläche stehenden Normalen enden sollten, so daß sie bürstenartig zu der späteren Schleifoberfläche ausgerichtet sind. Dieses Fasergerüst wird dann in einem Verfahrensschritt mit kohlenstoffreichen Polymeren, die auch als Precursoren bezeichnet werden, getränkt. Eine solche Tränkung der einzelnen Fasern kann auch vor dem Aufbau des Fasergerüsts erfolgen, indem entweder die einzelnen Fasern getränkt werden oder die einzelnen Faserlagen in Form der Gewebe, Gestricke und/oder Gewirke. Diese Tränkung kann durch Harzinjektion, Wickel- oder Prepregtechnik erfolgen. Der Kohlenstoffgehalt des Polymers sollte vorzugsweise > 30% bezogen auf die Masse nach der Pyrolyse, auf die nachfolgend noch Bezug genommen wird, betragen; dieser hohe Kohlenstoffgehalt wird, wie nachfolgend noch ersichtlich werden wird, dazu genutzt, daß sich die erforderlichen Karbide bilden. Diesem Polymer, das zur Beschichtung, Tränkung und Einbettung (Matrix) der Fasern verwendet wird, können weitere Füllstoffe zugesetzt werden, wobei diese Füllstoffe im wesentlichen, neben Kohlenstoff aus Hartstoffen bestehen sollten. Diese Hartstoffe sollten auf diejenigen abgestimmt sein, die die spanabhebende Wirkung hervorrufen. Es sollte darauf geachtet werden, daß die Korngröße dieser pulverförmigen Füllstoffe eine geeignete Korngröße besitzt, die im Bereich von 1 µm bis 100 µm liegen sollte. Diese Füllstoffe können vor der Tränkung des Fasergerüsts dem Polymer zugemischt werden, so daß eine Polymersuspension zur Tränkung bereitgestellt wird. In Bezug auf das Volumen dieser Suspension sollte der Füllstoffanteil < 30 Volumen-% betragen. Die Polymersuspension kann in den Faserkörper injiziert werden, wobei Injektionsdrücke von 5 bar bei einer Temperatur von etwa 200°C geeignet sind.

Der so erzeugte Körper wird nach der Aushärtung einer Pyrolyse, bevorzugt unter Zufuhr eines Schutzgases, wie Stickstoff, drucklos bei einer Temperatur von etwa 900°C unterworfen. Aufgrund dieser Pyrolyse erfolgt eine Umwandlung der Polymermatrix in amorphen Kohlenstoff. Gleichzeitig bildet sich, aufgrund einer Volumenschrumpfung eine Mikrorißstruktur um das Fasergerüst herum, mit einer offenen Porosität, die geeignet durch die Menge und Art der injizierten Polymersuspension eingestellt werden kann. Die nun vorliegende Vorform mit der definierten Mikrorißstruktur ist im wesentlichen formstabil und entspricht den äußeren Abmessungen des herzustellenden Schleifrings 1, wie er in der Figur 3 gezeigt ist.

In einem weiteren Verfahrensschritt wird in diese Vorform nun ein flüssiges Metall, zum Beispiel flüssiges Silizium, infiltriert. Sofern für diese Infiltration flüssiges Silizium eingesetzt wird, wird eine Temperatur hierbei von etwa 1650°C eingestellt, d.h. diese Infiltrationstemperatur liegt oberhalb des Schmelzpunktes von Silizium, der 1410°C beträgt. Unter Anlegung eines geeigneten Vakuums während der Infiltration kann die Infiltration kontrolliert werden, so daß eine sehr rasche Füllung der Poren möglich ist. Das flüssige, infiltrierte Silizium reagiert mit Kohlenstoff, der aufgrund des pyrolisierten Harzes oder aber durch Einbringen als Füllstoff in das Harz bzw. Polymer vorliegt, zu Siliziumkarbid, was einen geeigneten Hartstoff zum Erzielen der erwünschten abrasiven Eigenschaften des Werkzeugs darstellt. Das in situ gebildete Siliziumkarbid zeigt eine ausgeprägte, kristalline Struktur. Die Temperaturerhöhung auf 1650°C, also oberhalb des Schmelzpunktes von Silizium, während der Infiltration ist im Hinblick auf ein Kornwachstum förderlich, da sich herausgestellt hat, daß die Hartstoffkörnung nicht zu klein sein darf, damit ein definiertes Ausbrechen gewährleistet ist, um die Schleifoberfläche während des Einsatzes des Werkzeugs durch ausbrechende Hartstoffkörner zu erneuern.

Nach einer Haltedauer von 2 Stunden bei einer Temperatur von 1650°C wird ein Verbundwerkstoff erhalten, der etwa: 60 Gew.-% Fasern und in der Matrix 5 Gew.-% Kohlenstoff, 30 Gew.-% Siliziumkarbid und 5 Gew.-% Silizium aufweist. Die Korngröße des Siliziumkarbids liegt im Bereich von 5 µm bis 20 µm. Sie läßt sich durch eine thermische Nachbehandlung bei etwa 2000°C auf eine Korngröße bis etwa 50 µm steigern.

Die Siliziumschmelze kann noch mit weiteren, geeigneten Zusätzen angereichert sein, um geeignete Hartstoffe zu bilden. Hierzu wird bevorzugt Bor zugegeben, und zwar in einer Menge < 10% bezogen auf die Masse des Siliziums. Durch den Zusatz von Bor wird nicht nur der Schmelzpunkt von Silizium erniedrigt, was in Bezug auf eine schonendere Behandlung des Fasergerüsts (geringere Temperaturbelastung) förderlich ist, sondern Bor bildet mit dem infiltrierten Metall Boride, d.h. in dem Fall eines Infiltrierens von Silizium als Metall werden neben Siliziumkarbiden auch Siliziumboride und Borkarbide als Hartstoffe gebildet.

Setzt man der Siliziumschmelze 3 Gew.% Bor zu, so reduziert sich die Schmelztemperatur auf 1385°C und es entsteht, wie vorstehend angegeben, ein größeres Siliziumkarbid-Korn, das um etwa einen Faktor 10 größer ist; außerdem wurde eine Bildung von Siliziumborid und Borkarbid beobachtet.

Der Schleifring 1 wie er in seiner Herstellung vorstehend beschrieben wird, wird dann auf die Trägerscheibe 2, wie dies in Figur 3 dargestellt ist, aufgeklemmt, aufgeschraubt oder in geeigneter Weise damit verbunden. Beispielsweise kann zwischen der Trägerscheibe und dem Tragring eine Verbindungsschicht aufgebracht sein, die in ihrer Zusammensetzung von dem Material der Trägerscheibe 2 abhängig ist. Als Trägerscheibe wird bevorzugt ein Kohlenstoffaserkörper eingesetzt, der ähnlich dem Schleifring 1 aufgebaut ist und der sich zum einen durch sein geringes Gewicht auszeichnet, was gerade im Hinblick auf die sich drehenden Massen einer Schleifscheibe von Vorteil ist, der darüberhinaus hohen Temperaturen standhält, unter denen gerade der erfindungsgemäße Schleifring 1 eingesetzt werden kann. Schließlich ist ein weiterer Vorteil einer Trägerscheibe 2 aus einem Kohlenstoffasergerüst darin zu sehen, daß der Schleifring 1 mit der Trägerscheibe über eine Zwischenschicht aus Silizium, das sich unter Erwärmung mit freiem Kohlenstoff der Trägerscheibe 2 zu Siliziumkarbid umwandelt, so daß eine feste Verbindung zwischen der Trägerscheibe 2 und dem Schleifring 1 erzielt wird.

In den Figuren 1A und 1B ist eine Frässcheibe 4 mit einer Aufnahmebohrung 3 gezeigt, die, um den Außenumfang verteilt, mehrere angeformte Schneiden 5 besitzt. Diese Frässcheibe 4 ist nach einem Verfahren hergestellt, wie es vorstehend anhand des Schleifrings 1 erläutert wurde.

In den Figuren 2A und 2B ist ein Fräskopf 6 gezeigt, der einen Trägerkörper 7 aufweist, in den einzelne, zerspanende Werkzeugteile 8, die jeweils mit einer Schneidkante 9 versehen sind, eingesetzt sind. Der Trägerkörper 7 kann entsprechend der Trägerscheibe 2 der Ausführungsform der Figur 3 aus einem Kohlenstoffasergerüst aufgebaut werden, wobei die einzelnen Werkzeugteile 8 mit dem Kohlenstoffasergerüst wiederum durch die angegebene Verbindungstechnik in Form beispielsweise einer Siliziumschicht, verbunden werden. Diese angegebene Verbindungstechnik hat darüberhinaus den Vorteil, daß die Werkzeugteile 8 unter entsprechender Temperaturanwendung von dem Trägerkörper 7 gelöst werden können, um sie durch neue Teile zu ersetzen, falls sie abgenutzt sind.

Wie die Figuren 4A, 4B und 4C zeigen, können mit der angegebenen Verfahrensweise sehr unterschiedlich profilierte Arbeitsbereiche des Werkzeugs definiert hergestellt werden, beispielsweise abgerundet oder konisch zulaufend, wie dies die Figuren 48 und 4C jeweils verdeutlichen. Um eine solche Kontur des Arbeitsbereichs zu erzielen, muß das gemäß dem vorstehend angegebenen Verfahren hergestellte Werkzeug keiner Nachbearbeitung unterworfen werden, da bereits durch die Formgebung des Vorkörpers bzw. der Vorform diese Endkontur mit sehr engen Fertigungstoleranzen erstellt werden kann. Für Profil-Werkzeuge ist gegebenenfalls eine exakte Geometrie, zum Beispiel mittels Diamantwerkzeugen, abzurichten.

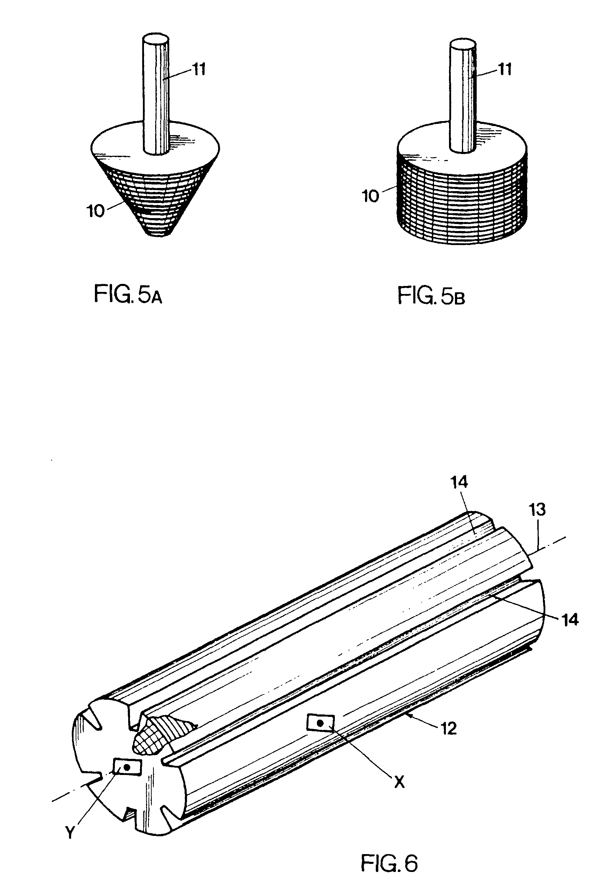

Die Figuren 5A und 5B zeigen einen kegelförmigen und einen zylindrischen Schleifstein 10, die jeweils an einen Tragzapfen 11 angeformt sind. Für diesen Tragzapfen wird bevorzugt ein keramisches Verbundmaterial oder ein Metall, beispielsweise elastischer Stahl, verwendet. Die form- und kraftschlüsige Verankerung kann, wie oben beschrieben, beispielsweise durch eine Siliziumschicht erfolgen oder durch Löten, wobei der Tragzapfen beispielsweise als Vierkant ausgebildet ist, der in eine entsprechende Ausnehmung im Schleifstein 10 eingebracht ist:

Figur 6, die eine Schneidwelle 12 zeigt, verdeutlicht, daß auch groß dimensionierte, spanabhebende Werkzeuge hergestellt werden können. Diese Schneidwelle 12 besitzt parallel zu ihrer Drehachse 13 verlaufend nutenartige Vertiefungen 14, deren eine äußere Kante radial nach außen weiter vorsteht als die andere (vergleichbar mit der Darstellung der Figur 1A), wobei diese vorstehende Kante eine Schneide bildet. Auch diese Schneidwelle ist gemäß dem vorstehend angegebenen Herstellverfahren gefertigt.

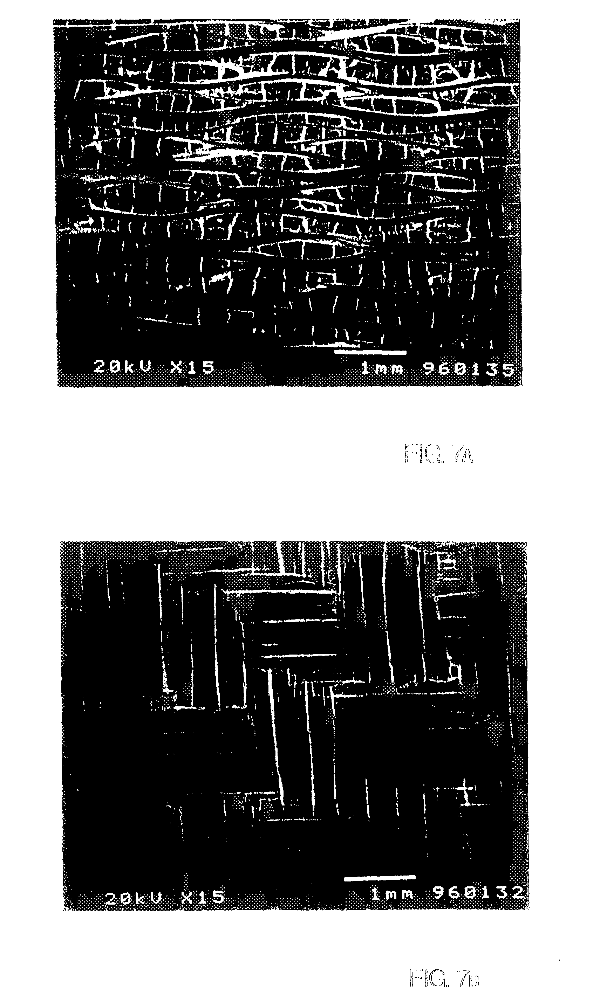

In den Figuren 7A und 7B sind jeweils eine Rasterektronenmikroskopaufnahme (REM-Aufnahme) der in den Figuren 3 und 6 bezeichneten Flächensegmente, die mit X und Y bezeichnet sind, d.h. Flächensegmente, die den Aufbau des Werkzeugs in zwei zueinander senkrecht stehenden Ebenen zeigen, dargestellt.

Wie der Querschnitt der Figur 7A zeigt, sind zweidimensionale Kohlenstoffgewebelagen mit längs und senkrecht zur Schnittebene liegenden Fasern verlaufend, wobei die senkrechten Fasern den vorstehend angesprochenen Bürsteneffekt bewirken. Während die Kohlenstoffasern in der Darstellung durch die schwarzen Bereiche wiedergegeben sind, sind die weißen Bereiche Siliziumkarbid und restliches Silizium. Aufgrund der Siliziumkarbid- und Siliziumstrukturen ist auch deutlich der Faserverlauf zu erkennen, da das Silizium und Siliziumkarbid in der Matrix um die Fasern herum eingelagert ist. Die Vergrößerung der Figur 7A und der Figur 7B ist jeweils 15-fach. In Figur 7A ist weiterhin der schichtartige Aufbau des Werkstoffs aus den einzelnen Gewebelagen zu erkennen. Die Kohlenstoffaserrovings sind in Bezug auf die Blattebene, wie vorstehend bereits erwähnt, in 0° bzw. 90° orientiert. Der Werkstoff besteht zu etwa zwei Dritteln aus Kohlenstoff und ca. einem Drittel aus SiC, was von dem eingestellten Faservolumengehalt im Polymerzustand, d.h. im Zustand, in dem die Fasern in dem Polymer bzw. Precusor eingebettet oder getränkt sind, abhängt.

Dagegen sind in Figur 7B, die den Schnitt senkrecht zu dem Querschnitt der Figur 7A zeigt, Knotenpunkte, die Faserwebart und die innige Verbindung zwischen Faser und Matrix zu erkennen. In den Knotenbereichen der Faserrovings können Anhäufungen von Restmatrixwerkstoffen auftreten, was durch die größeren, zusammenhängenden weißen Bereiche zu erkennen ist. Außerdem ist in Figur 7B das Gewebe mit Schußfäden und Kettfäden zu sehen, die senkrecht zueinander orientiert sind.

## Patentansprüche

1. Werkzeug (6, 10, 12) zur spanabhebenden Bearbeitung von Werkstücken, das mindestens ein zerspanendes Werkzeugteil (8) mit wenigstens einem Arbeitsbereich in Form einer schneidenden (von schneidenden) Fläche(n) (9) aufweist (aufweisen), und wobei wenigstens die schneidende(n) Fläche(n) (9) aus Verbundwerkstoff besteht (bestehen), welcher Verbundwerkstoff kontinuierliche Fasern aus Kohlenstoff und/oder keramischem Werkstoff und kristallinem Hartstoff aufweist, wobei ein Teil der Fasern im Oberflächenbereich der schneidenden Flächen (9) endet und wobei die im Oberflächenbereich der schneidenden Flächen (9) endenden Fasern mit ihrer Achse so ausgerichtet sind, dass sie eine größere Richtungskomponente in Richtung der Flächennormalen im Oberflächenbereich der schneidenden Fläche(n) als senkrecht dazu aufweisen, wobei der Verbundwerkstoff durch ein Verfahren erhältlich ist, nach welchem ein mit kontinuierlichen Fasern aus Kohlenstoff und/oder keramischem Werkstoff poröses Fasergerüst gebildet wird, wobei das Fasergerüst mit flüssigem Metall infiltriert wird, und wobei durch Reaktion des Metalls mit Kohlenstoff der Fasern und/oder mit als Füllstoff zugesetztem Kohlenstoff in situ kristalliner Hartstoff erzeugt wird.

2. Werkzeug nach Anspruch 1, **dadurch gekennzeichnet, daß** das Fasergerüst in Form eines Gewebes, Gewirkes und/oder Gestrickes gebildet wird.

3. Werkzeug nach Anspruch 1, **dadurch gekennzeichnet, daß** mindestens ein Teil der Fasern aus Kohlenstoff gebildet ist, wobei der Anteil der Kohlenstoffasern in Bezug auf das Fasergerüst zwischen 50% und 100% beträgt.

4. Werkzeug nach Anspruch 1, **dadurch gekennzeichnet, daß** wenigstens ein Teil des Hartstoffs in Form von kristallinem Karbid vorliegt.

5. Werkzeug nach Anspruch 4, **dadurch gekennzeichnet, daß** die Korngröße des kristallinen Karbids zwischen 5 und 100 µm, vorzugsweise größer 10 µm, beträgt.

6. Werkzeug nach Anspruch 4, **dadurch gekennzeichnet, daß** das kristalline Karbid ein Karbid aus der Gruppe Silizium-, Titan-, Zirkonium-, Chrom- und/oder Vanadium-Karbid ist.

7. Werkzeug nach Anspruch 6, **dadurch gekennzeichnet, daß** das kristalline Karbid Siliziumkarbid ist.

8. Werkzeug nach Anspruch 4, **dadurch gekennzeichnet, daß** als Hartstoff neben kristallinem Karbid noch kristallines Borid vorliegt.

9. Werkzeug nach Anspruch 1, **dadurch gekennzeichnet, daß** der Verbundwerkstoff einen Rest an nicht reagiertem Metall enthält, wobei dessen Anteil weniger als 10 Volumen-% vom gesamten Verbundwerkstoff beträgt.

10. Werkzeug nach Anspruch 1, **dadurch gekennzeichnet, daß** mindestens ein Teil der Fasern aus keramischem Werkstoff, insbesondere aus Siliziumkarbid und/oder Siliziumnitrid, gebildet ist, wobei der Anteil dieser Fasern in Bezug auf das Fasergerüst zwischen 50% und 100% beträgt.

11. Werkzeug nach Anspruch 1, **dadurch gekennzeichnet, daß** der Faservolumengehalt zwischen 20 und 70%, vorzugsweise über 50%, bezogen auf eine Volumeneinheit des Verbundwerkstoffs beträgt.

12. Werkzeug nach Anspruch 1, **dadurch gekennzeichnet, daß** der Verbundwerkstoff Füllstoffe in Form von pulverförmigen Hartstoffen und/oder pulverförmigem Kohlenstoff enthält.

13. Werkzeug nach Anspruch 12, **dadurch gekennzeichnet, daß** die Füllstoffe eine Korngröße im Bereich von 1 µm bis 100 µm aufweisen.

14. Werkzeug nach Anspruch 12, **dadurch gekennzeichnet, daß** der Gehalt an Füllstoffen weniger als 50 Volumen-% der Matrix beträgt.

15. Werkzeug nach Anspruch 1, **dadurch gekennzeichnet, daß** der als Füllstoff eingebrachte Kohlenstoff in Form von amorphem Kohlenstoff vorliegt.

16. Werkzeug nach Anspruch 12, **dadurch gekennzeichnet, daß** jede Füllstoffkomponente jeweils in einer Menge von weniger als 10 Gewichts-% des Verbundwerkstoffs vorliegt.

17. Werkzeug nach Anspruch 1, **dadurch gekennzeichnet, daß** die Kohlenstoffasern ein Zug-E-Modul im Bereich zwischen 200 und 300 GPa haben.

18. Werkzeug nach Anspruch 1 oder 12, **dadurch gekennzeichnet, daß** der Volumenanteil der Hartstoffe am Verbundwerkstoff 10% bis 50% beträgt

## Claims

1. Tool (6, 10, 12) for machining workpieces comprising at least one machining die (8) with at least one working area in the form of a cutting surface (cutting surfaces) (9), and wherein at least the cutting surface (cutting surfaces) (9) consisting of a composite material wherein this composite material comprising continous fibers of carbon and/or ceramic material and crystalline hard material, wherein a part of the fibers are ending in the surface region of the cutting surfaces and wherein the fibers ending in the surface region of the cutting surfaces have their axes oriented such that they exhibit a larger directional component in a direction normal to the surface region of the cutting surface (cutting surfaces) than perpendicular thereto, wherein the composite material can be formed by a process in which a porous fiber structure is formed with continuous fibers of carbon and/or ceramic material, wherein a liquid metal is infiltrated into the fiber structure and wherein crystalline hard material is formed in situ by a reaction of the metal with the carbon of the fibers and/or with carbon added as filler material.

2. Tool as set forth in claim 1, wherein the fiber structure is made in the form of at least one of a web, a weave and a knit.

3. Tool as set forth in claim 1, wherein at least a portion of the fibers is made of carbon, where the portion of the carbon fibers in relation to the fiber structure is between 50% and 100%.

4. Tool as set forth in claim 1, wherein at least a portion of the hard material is present in the form of crystalline carbide.

5. Tool as set forth in claim 4, wherein the grain size of the crystalline carbide is between 5 and 100 µm, preferable more than 10 µm.

6. Tool as set forth in claim 4, wherein the crystalline carbide is a carbide selected from the group consisting of silicon, titanium, zirconium, chromium and vanadium carbide.

7. Tool as set forth in claim 6, wherein the crystalline carbide is silicon carbide.

8. Tool as set forth in claim 4, wherein crystalline boride is present in the hard material in addition to crystalline carbide.

9. Tool as set forth in claim 1, wherein the composit material contains a residue of not reacted metal and wherein the portion thereof is less_than 10 percent in volume of the entire composite material.

10. Tool as set forth in claims 1, wherein at least a portion of the fibers is made of ceramic material, particularly of silicon carbide and/or silicon nitride, whereby the portion of these fibers is between 50% and 100% with regard to the entire fiber structure.

11. Tool as set forth in claim 1, wherein the fiber volume content in relation to the unit of volume of the composite material is 20 to 70%, preferably greater than 50%.

12. Tool as set forth in claim 1, wherein the composite material contains filler materials in the form of powdery hard materials and/or powdery carbon.

13. Tool as set forth in claim 12, wherein the filler materials have a grain size in a range of 1 µm to 100 µm.

14. Tool as set forth in claim 12, wherein the content of filler materials is less than 50 percent in volume of the matrix.

15. Tool as set forth in claim 1, wherein the carbon which is added as filler material is present in the form of amorphous carbon.

16. Tool as set forth in claim 12, wherein each filler material component is present in an amount of less than 10 percent in weight of the composite material.

17. Tool as set forth in claim 1, wherein the carbon fibers have a tensile modulus of elasticity in a range between 200 and 300 GPa.

18. Tool as set forth in claim 1 or claim 12, wherein the volume portion of the hard material in the composite material is 10% to 50%.

## Revendications

1. Outil (6, 10, 12) pour l'usinage de pièces par enlèvement de copeaux, qui comprend au moins une partie d'outil (8) d'usinage, munie d'au moins une zone de travail formée par une (des) surface(s) de coupe (9), au moins la (les) surface(s) de coupe (9) étant réalisée(s) dans un matériau composite, lequel matériau composite comporte des fibres de carbone et/ou de matériau céramique continues et un carbure cristallin, dans lequel une partie des fibres se termine dans la partie superficielle des surfaces de coupe (9) et dans lequel les fibres se terminant dans la partie superficielle des surfaces de coupe (9) sont orientées avec leur axe, de telle sorte qu'elles possèdent une composante directionnelle dans le sens des normales à la surface dans la partie superficielle des surfaces de coupe plus grande que dans le sens perpendiculaire à celles-ci, dans lequel le matériau composite est obtenu par un procédé qui permet de former une texture de fibres poreuse avec des fibres de carbone et/ou de matériau céramique continues, dans lequel un métal est infiltré liquide dans la texture de fibres et dans lequel la réaction du métal avec le carbone des fibres et/ou avec le carbone ajouté sous forme de matière de charge entraîne la formation in situ d'un carbure cristallin.

2. Outil selon la revendication 1, **caractérisé en ce que** la texture de fibres est réalisée sous la forme d'un tissu, d'un tissu à mailles et/ou d'un tricot.

3. Outil selon la revendication 1, **caractérisé en ce qu'**au moins une partie des fibres est formée par des fibres de carbone, la teneur en fibres de carbone étant comprise entre 50 % et 100 % par rapport à la texture de fibres.

4. Outil selon la revendication 1, **caractérisé en ce qu'** au moins une partie du carbure est formé par un carbure cristallin.

5. Outil selon la revendication 4, **caractérisé en ce que** la grosseur des grains du carbure cristallin est comprise entre 5 et 100 µm, de préférence est supérieure à 10 µm.

6. Outil selon la revendication 4, **caractérisé en ce que** le carbure cristallin est un carbure du groupe silicium, titane, zirconium, chrome et/ou vanadium.

7. Outil selon la revendication 6, **caractérisé en ce que** le carbure cristallin est un carbure de silicium.

8. Outil selon la revendication 4, **caractérisé en ce que**, outre le carbure cristallin, le matériau à résistance mécanique élevée contient aussi du borure cristallin.

9. Outil selon la revendication 1, **caractérisé en ce que** le matériau composite contient un reste de métal, n'ayant pas réagi, cette part étant inférieure à 10 % en volume de l'ensemble du matériau composite.

10. Outil selon la revendication 1, **caractérisé en ce qu'**au moins une partie des fibres est formée dans un matériau céramique, en particulier du carbure de silicium et/ou du nitrure de silicium, la teneur de ces fibres étant comprise entre 50 % et 100 % par rapport à la texture de fibres.

11. Outil selon la revendication 1, **caractérisé en ce que** la teneur volumique des fibres est comprise entre 20 et 70 %, de préférence est supérieure à 50 %, par rapport à une unité de volume du matériau composite.

12. Outil selon la revendication 1, **caractérisé en ce que** le matériau composite contient des matières de charge formées par du carbure en poudre et/ou du carbone en poudre.

13. Outil selon la revendication 12, **caractérisé en ce que** les matières de charge ont une grosseur de grains dans le domaine de 1 µm à 100 µm.

14. Outil selon la revendication 12, **caractérisé en ce que** la teneur en matières de charge est inférieure à 50 % en volume de la matrice.

15. Outil selon la revendication 1, **caractérisé en ce que** le carbone ajouté comme matière de charge est présent sous forme de carbone amorphe.

16. Outil selon la revendication 12, **caractérisé en ce que** chaque composant des matières de charge est présent dans une quantité inférieure à 10 % en poids du matériau composite.

17. Outil selon la revendication 1, **caractérisé en ce que** les fibres de carbone ont un module d'élasticité sous traction dans le domaine entre 200 et 300 GPa.

18. Outil selon la revendication 1 ou 12, **caractérisé en ce que** la part volumique des carbures dans le matériau composite est de l'ordre de 10 % à 50 %.
